# EUROPEAN PATENT APPLICATION

(11) **EP 4 850 883 A1**
(43) Date of publication of application: **09.12.2026**
(21) Application number: 26180202.9
(22) Date of filing: 21.05.2026
(51) Int. Cl.: B29C 43/18, B29C 35/02, B29C 37/00, B29D 99/00, B29K 21/00

(54) **COMPOSITE PRODUCT OF METAL FITTING AND RUBBER AND METHOD FOR MANUFACTURING THE SAME**

(30) Priority: 02.06.2025 JP 2025092035
(71) Applicant: Mitsubishi Cable Industries, Ltd., Chiyoda-ku Tokyo 100-8303 (JP)
(72) Inventor: MAKINO, Daisuke, Arida-shi, Wakayama, 649-0304 (JP)
(74) Representative: Bandpay & Greuter

(57) **Abstract**

In a composite product of a metal fitting and rubber, generation of a burr is prevented at a boundary between the metal fitting and the rubber with a simple configuration in molding the composite product of the metal fitting and the rubber.

The composite product includes a cylindrical shaft portion 3 extending in an axial direction, a metal fitting large diameter portion 5 an outer diameter of which is larger than an outer diameter of the shaft portion 3 at least at a lower end, and a metal fitting 2 that is continuous with the lower end of the metal fitting large diameter portion 5 and an upper end of the shaft portion 3 and includes a metal fitting tapered portion 4 gradually decreasing in an outer diameter downward, at least an outer periphery of the metal fitting large diameter portion 5 is covered with rubber, the metal fitting tapered portion 4 and the shaft portion 3 are exposed without being covered with the rubber, a rubber tapered surface 11 is formed at an outer peripheral surface of the rubber continuous with the metal fitting tapered portion 4, and a rubber angle α1 of the rubber tapered surface 11 to a shaft center of the shaft portion 3 is smaller than a metal fitting angle β of the metal fitting tapered portion 4 to the shaft center of the shaft portion 3.

## Description

### TECHNICAL FIELD

The present disclosure relates to a composite product of a metal fitting and rubber and a method for manufacturing the composite product and more specifically relates to a technology that reduces generation of a thin rubber burr in vulcanization molding of a composite of a metal fitting and rubber.

### BACKGROUND

Conventionally, there has been known a composite product of a metal fitting and rubber that includes a rigid metal shaft portion and rubber that covers the shaft portion and adheres to a portion to be sealed to exhibit a sealing effect.

There has been a problem in which, in molding the composite product, rubber leaks from a gap between a recessed portion of a metal mold and a contact surface of the shaft portion to form a burr. The burr needs to be removed since the burr deteriorates appearance and easily peels off to be a foreign substance during use.

Thus, for example, as described in Japanese Unexamined Patent Publication No. H11-235723, it has been known that a vent portion via which rubber overflows when the rubber is pressed into a molding portion of an inner mold and becomes excessive is provided in the inner mold.

### SUMMARY OF THE INVENTION

### TECHNICAL PROBLEM

In a configuration described in Japanese Unexamined Patent Publication No. H11-235723, however, a problem arises in which providing the vent potion in the inner mold or the like complicates a configuration of the metal mold.

In view of the foregoing, the present disclosure has been devised and it is therefore an object of the present disclosure to prevent, in molding a composite product of a metal fitting and rubber, generation of a burr at a boundary between the metal fitting and the rubber with a simple configuration.

### SOLUTION TO THE PROBLEM

In order to achieve the object described above, in the present disclosure, an angle of a metal fitting tapered surface and an angle of a metal fitting tapered portion are adjusted.

Specifically, according to a first aspect, a composite product of a metal fitting and rubber includes a cylindrical shaft portion extending in an axial direction, a metal fitting large diameter portion an outer diameter of which is larger than an outer diameter of the shaft portion at least at a lower end, and a metal fitting that is continuous with the lower end of the metal fitting large diameter portion and an upper end of the shaft portion and includes a metal fitting tapered portion gradually decreasing in an outer diameter downward, at least an outer periphery of the metal fitting large diameter portion is covered with rubber, the metal fitting tapered portion and the shaft portion are exposed without being covered with the rubber, a rubber tapered surface is formed at an outer peripheral surface of the rubber continuous with the metal fitting tapered portion, and a rubber angle of the rubber tapered surface to a shaft center of the shaft portion is smaller than a metal fitting angle of the metal fitting tapered portion to the shaft center of the shaft portion.

According to the configuration described above, since there is almost no change in volume of the rubber even after the rubber has been vulcanized, the rubber angle is determined by a metal mold angle formed by a metal mold tapered surface of a metal mold inner surface used in molding. Moreover, the metal fitting tapered angular portion formed between the metal fitting tapered portion and the metal fitting large diameter portion is in linear contact with the metal mold tapered surface, and therefore, a surface pressure tends to be high and leakage of the rubber during molding can be prevented even with a small fitting force. Therefore, while the metal mold tapered surface can be prevented from being damaged, generation of a burr can be suppressed and the metal fitting can be easily released from the inner mold during mold release.

According to a second aspect, in the first aspect, the rubber angle is smaller than the metal fitting angle by 1 degree or more to 5 degrees or less.

A sufficient difference cannot be made by causing the metal mold angle that can be inferred based on the rubber angle to be smaller than the metal fitting angle only by an angle of less than 1 degree and thus an effect of preventing leakage of the rubber cannot be reliably exhibited and, when the metal mold angle is smaller than the metal fitting angle by an angle larger than 5 degrees, the metal fitting can be inserted in the metal mold in an inclined state. When the metal fitting is inclined, a gap is generated between the metal fitting and the metal mold tapered surface, so that a burr is generated. However, according to the configuration described above, there is no need to tightly fit the metal fitting with the metal mold inner surface, and thus, there is no possibility that the metal mold inner surface and the shaft portion of the metal fitting are damaged, so that the metal fitting is properly fitted with the metal mold inner surface, the rubber is less likely to leak, and generation of a burr is suppressed.

According to a third aspect, in the first or second aspect, a metal fitting tapered angular portion that is formed between the metal fitting tapered portion and the metal fitting large diameter portion has an angular shape with no rounded edge.

According to the configuration described above, since the metal fitting tapered angular portion in contact with the metal mold inner surface has an angular shape, the metal fitting tapered angular portion is likely to be in linear contact with the metal mold inner surface in a smaller area, as compared to when the metal fitting tapered angular portion has a rounded shape, so that leakage of the rubber during molding can be reliably prevented.

According to a fourth aspect, in the first or second aspect, a metal fitting tapered corner portion that is formed between the metal fitting tapered portion and the shaft portion of the metal fitting has a shape with no rounded edge or a rounded shape with a radius of 0.1 mm or less.

According to the configuration described above, when the metal fitting tapered corner portion has a rounded shape with a radius of 0.1 mm or less, the metal fitting tapered angular portion contacts the metal mold tapered surface and therefore is likely to be in linear contact with the metal mold tapered surface in a smaller area, as described above, so that leakage of the rubber during molding can be reliably prevented.

A method for manufacturing a composite product of a metal fitting and rubber according to a fifth aspect, the composite product including a cylindrical shaft portion extending in an axial direction, a metal fitting large diameter portion an outer diameter of which is larger than an outer diameter of the shaft portion at least at a lower end, and a metal fitting that is continuous with the lower end of the metal fitting large diameter portion and an upper end of the shaft portion and includes a metal fitting tapered portion gradually decreasing in an outer diameter downward, and the composite product having a configuration in which at least an outer periphery of the metal fitting large diameter portion is covered with rubber, and the metal fitting tapered portion and the shaft portion are exposed without being covered with the rubber, includes preparing a metal mold that includes a lower mold, an upper mold, and an inner mold provided between the lower mold and the upper mold and having an inner surface that covers outer peripheral surfaces of at least the shaft portion, the metal fitting tapered portion, and the rubber, and in which a metal mold angle of a metal mold tapered surface of the inner mold that the metal fitting tapered portion contacts to a shaft center of the shaft portion is smaller than a metal fitting angle of the metal fitting tapered portion to the shaft center of the shaft portion when the metal fitting is inserted therein, placing unvulcanized rubber on an upper side of the metal fitting in a state where the metal fitting is inserted in the inner mold and a metal fitting tapered angular portion that is formed between the metal fitting tapered portion and the metal fitting large diameter portion is in linear contact with the metal mold tapered surface over an entire periphery, clamping the metal mold, heating the metal mold, and then, maintaining the metal mold for a predetermined time, and releasing the metal fitting from the metal mold after vulcanizing the unvulcanized rubber.

According to the configuration described above, the metal fitting tapered angular portion formed between the metal fitting tapered portion and the metal fitting large diameter portion is in linear contact with a metal mold tapered surface, and therefore, a surface pressure tends to be high and leakage of the rubber during molding can be prevented even with a small fitting force. Therefore, while the metal mold tapered surface and the shaft portion of the metal fitting can be prevented from being damaged, generation of a burr can be suppressed and the metal fitting can be easily released from the inner mold during mold release.

According to a sixth aspect, in the fifth aspect, the metal mold angle is smaller than the metal fitting angle by 1 degree or more and 5 degrees or less.

A sufficient difference cannot be made by causing the metal mold angle to be smaller than the metal fitting angle only by an angle of less than 1 degree and thus an effect of preventing leakage of the rubber cannot be reliably exhibited and, when the metal mold angle is smaller than the metal fitting angle by an angle larger than 5 degrees, the metal fitting can be inserted in the metal mold in an inclined state. When the metal fitting is inclined, a gap is generated between the metal fitting and the metal mold tapered surface, so that a burr is generated. However, according to the configuration described above, there is no possibility that the metal fitting is too tightly fitted with the inner surface of the metal mold to damage the inner surface of the metal mold and the shaft portion of the metal fitting, so that the metal fitting is properly fitted with the metal mold inner surface, the rubber is less likely to leak, and generation of a burr is suppressed.

According to a seventh aspect, in the fifth or sixth aspect, the metal fitting tapered angular portion has an angular shape with no rounded edge.

According to the configuration described above, since the metal fitting tapered angular portion that contacts the metal mold inner surface has an angular shape, the metal fitting tapered angular portion is likely to be in linear contact with the metal mold inner surface in a smaller area, as compared to when the metal fitting tapered angular portion has a rounded shape, so that leakage of the rubber during molding can be reliably prevented.

According to an eighth aspect, in the fifth or sixth aspect, a metal fitting tapered corner portion that is formed between the metal fitting tapered portion and the shaft portion of the metal fitting has a shape with no rounded edge or a rounded shape with a radius of 0.1 mm or less.

According to the configuration described above, when the metal fitting tapered corner portion has a rounded shape with a radius of 0.1 mm or less, the metal fitting tapered angular portion contacts the metal mold tapered surface, and therefore, is likely to be in linear contact with the metal mold tapered surface in a smaller area, as described above, so that leakage of the rubber during molding can be reliably prevented.

### ADVANTAGES OF THE INVENTION

As described above, according to the present disclosure, in molding a composite product of a metal fitting and rubber, generation of a burr can be prevented at a boundary between the metal fitting and the rubber with a simple configuration.

### BRIEF DESCRIPTION OF THE DRAWINGS

FIG. 1 is a cross-sectional view illustrating an inner mold and a metal fitting according to an embodiment before and after molding in an enlarged manner.
FIG. 2 is a cross-sectional view illustrating a composite product.
FIG. 3A is a cross-sectional view illustrating a preparation step in a method for manufacturing a composite product.
FIG. 3B is a cross-sectional view illustrating a metal fitting insertion step in the method for manufacturing a composite product.
FIG. 3C is a cross-sectional view illustrating an unvulcanized rubber placing step in the method for manufacturing a composite product.
FIG. 3D is a cross-sectional view illustrating a press vulcanization step in the method for manufacturing a composite product.
FIG. 3E is a cross-sectional view illustrating a mold release step in the method for manufacturing a composite product.
FIG. 4A is a cross-sectional view illustrating a preparation step in a method for manufacturing a composite product in a first comparative example.
FIG. 4B is a cross-sectional view illustrating a metal fitting insertion step in the method for manufacturing a composite product in the first comparative example.
FIG. 4C is a cross-sectional view illustrating an unvulcanized rubber placing step in the method for manufacturing a composite product in the first comparative example.
FIG. 4D is a cross-sectional view illustrating a press vulcanization step in the method for manufacturing a composite product in the first comparative example.
FIG. 4E is a cross-sectional view illustrating a mold release step in the method for manufacturing a composite product in the first comparative example.
FIG. 5 is a cross-sectional view illustrating the method for manufacturing a composite product in the first comparative example, corresponding to FIG. 1.
FIG. 6 is a cross-sectional view of a composite product in the first comparative example, corresponding to FIG. 2.
FIG. 7A is a cross-sectional view corresponding to FIG. 1 when a metal mold angle is larger than a metal fitting angle in a second comparative example, corresponding to FIG. 1.
FIG. 7B is a cross-sectional view illustrating a cross section at a boundary between a shaft portion of a metal fitting and a metal fitting tapered surface in a third comparative example when the cross section at the boundary has a rounded shape, corresponding to FIG. 1.

### DETAILED DESCRIPTION

Embodiments of the present disclosure will be described below with reference to the accompanying drawings.

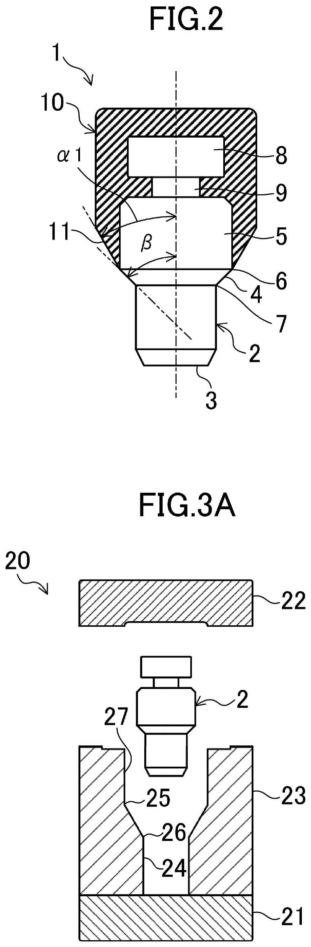

FIG. 2 illustrates a composite product 1 of a metal fitting and rubber according to an embodiment of the present disclosure, and the composite product 1 includes a cylindrical shaft portion 3 extending in an axial direction, a metal fitting large diameter portion 5 an outer diameter of which is larger than an outer diameter of the shaft portion 3 at least at a lower end, and a metal fitting 2 that is continuous with the lower end of the metal fitting large diameter portion 5 and an upper end of the shaft portion 3 and includes a metal fitting tapered portion 4 gradually decreasing in an outer diameter downward. There is no particular limitation on a shape of the metal fitting large diameter portion 5, but in this embodiment, the metal fitting large diameter portion 5 has a cylindrical shape and an upper portion thereof is continuous with a disk-shaped head portion 8 via a neck portion 9 with a small diameter.

A metal fitting tapered angular portion 6 that is formed between the metal fitting tapered portion 4 and the metal fitting large diameter portion 5 has an angular shape with no rounded edge.

The metal fitting 2 is formed of brass, stainless steel, or the like, but there is no particular limitation on a material of the metal fitting 2 as long as the metal fitting 2 is a metal part.

Peripheries of the metal fitting large diameter portion 5, the head portion 8, and the neck portion 9 are covered with rubber 10. Note that at least a portion (for example, an upper surface) of the head portion 8 may be exposed. The rubber 10 is formed of, for example, ethylene propylene diene rubber (EPDM), fluororubber, silicone rubber, or the like, but there is no particular limitation on the rubber 10 as long as the rubber 10 is vulcanizable rubber.

As a feature of this embodiment, the metal fitting tapered portion 4 and the shaft portion 3 are exposed without being covered with the rubber 10 and a rubber tapered surface 11 gradually decreasing in an outer diameter downward is formed at an outer peripheral surface of the rubber 10 continuous with the metal fitting tapered portion 4.

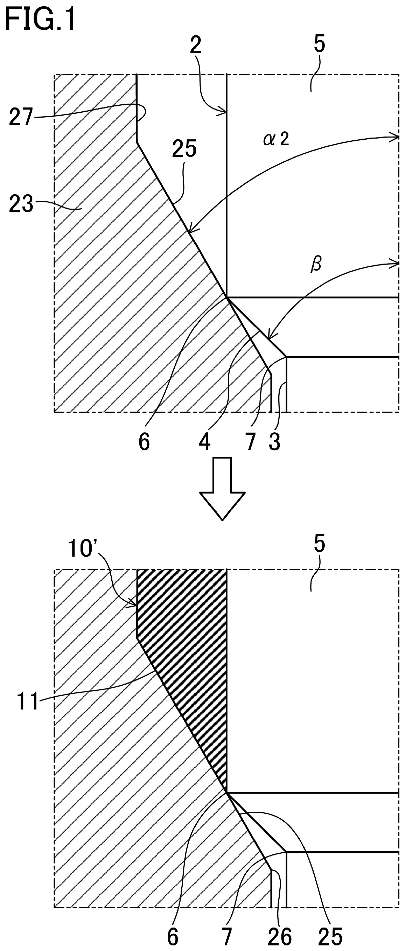

On top of the above, a rubber angle α1 of the rubber tapered surface 11 to a shaft center of the shaft portion 3 is smaller than a metal fitting angle β of the metal fitting tapered portion 4 to the shaft center of the shaft portion 3 (α1 < β). Note that, since rubber hardly shrinks after vulcanization, the rubber angle α1 is determined by a metal mold angle α 2 formed by an inner surface of a metal mold 20 used during molding, which will be described later (see FIG. 1).

The rubber angle α1 is preferably smaller than the metal fitting angle β by 1 degree or more and 5 degrees or less (1 degree ≤ β - α ≤ 5 degrees).

A sufficient difference cannot be made by causing the metal mold angle α2 that can be inferred based on the rubber angle α1 to be smaller than the metal fitting angle β only by an angle of less than 1 degree and thus an effect of preventing leakage of the rubber 10 cannot be reliably exhibited and, when the metal mold angle α2 is smaller than the metal fitting angle β by an angle larger than 5 degrees, the metal fitting 2 can be inserted in the metal mold 20 in an inclined state. When the metal fitting 2 is inclined, a gap is generated between the metal fitting and the metal mold tapered surface 25, so that a burr is generated. However, when the rubber angle α1 is smaller than the metal fitting angle β by an angle of 1 degree or more and 5 degrees or less, there is no possibility that the metal fitting 2 is too tightly fitted with the inner surface of the metal mold 20 to damage the inner surface (metal mold tapered surface 25) of the metal mold and the shaft portion 3 of the metal fitting 2, so that the metal fitting 2 is properly fitted with the inner surface of the metal mold 20, the rubber 10 is less likely to leak, and generation of a burr is suppressed.

### - Method For Manufacturing A Composite Product -

Next, a method for manufacturing the composite product 1 of the metal fitting 2 and the rubber 10 according to this embodiment will be described.

First, as illustrated in FIG. 3A, in a preparation step, the metal mold 20 is prepared. The metal mold 20 includes a lower mold 21, an upper mold 22, and an inner mold 23 provided between the lower mold 21 and the upper mold 22 and including an inner surface that covers outer peripheral surfaces of at least the shaft portion 3, the metal fitting tapered portion 4, and the rubber 10.

The inner mold 23 includes a small diameter hole portion 24 in which the shaft portion 3 is inserted, the metal mold tapered surface 25 with an outer diameter gradually increasing from the small diameter hole portion 24, and a large diameter hole portion 27 that covers an outer periphery of the rubber 10, and a metal mold tapered angular portion 26 is formed between the small diameter hole portion 24 and the metal mold tapered surface 25.

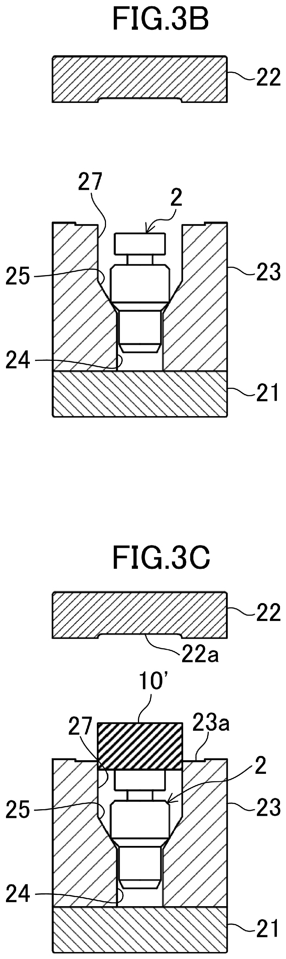

Subsequently, as illustrated in FIG. 3B, in a metal fitting insertion step, the metal fitting 2 is inserted in the lower mold 21 and the inner mold 23. Specifically, the shaft portion 3 of the composite product 1 is inserted in the small diameter hole portion 24 of the inner mold 23.

Then, as illustrated in FIG. 1 in an enlarged manner, when the metal fitting 2 is inserted, the metal mold angle α2 of the metal mold tapered surface 25 of the inner mold 23 that the metal fitting tapered portion 4 contacts to the shaft center of the shaft portion 3 is smaller than the metal fitting angle β of the metal fitting tapered portion 4 to the shaft center of the shaft portion 3 (α2 < β). Preferably, the metal fitting angle α2 is smaller than the metal fitting angle β by 1 degree or more and 5 degrees or less (1 degree ≤ β - α2 < 5 degrees).

Based on a dimensional relationship described above, the metal fitting tapered portion 4 is in linear contact with the metal mold tapered surface 25 over an entire periphery. That is, since the metal mold angle α2 is smaller than the metal fitting angle β, the metal fitting tapered angular portion 6 is in linear contact with the metal mold tapered surface 25. Specifically, the metal fitting tapered angular portion 6 preferably has an angular shape with no rounded edge, and thus, a contact area is further reduced.

At this time, a sufficient difference cannot be made by causing the metal mold angle α2 to be smaller than the metal fitting angle β only by an angle of less than 1 degree and thus the effect of preventing leakage of the rubber 10 cannot be reliably exhibited and, when the metal mold angle α2 is smaller than the metal fitting angle β by an angle larger than 5 degrees, the metal fitting 2 can be inserted in the metal mold in an inclined state. When the metal fitting 2 is inclined, a gap is generated between the metal fitting 2 and the metal mold tapered surface 25, so that a burr is generated. However, when 1 degree ≤ β - α2 ≤ 5 degrees, there is no possibility that the metal fitting 2 is too tightly fitted with the inner surface of the metal mold to damage the metal mold inner surface (metal mold tapered surface 25) and the shaft portion 3 of the metal fitting 2, so that the metal fitting 2 is properly fitted with the inner surface of the metal mold, the rubber 10 is less likely to leak, and generation of a burr is suppressed.

Moreover, in this embodiment, a metal fitting tapered corner portion 7 formed between the metal fitting tapered portion 4 and the shaft portion 3 of the metal fitting 2 has a shape without no rounded edge. A cross section of the metal fitting tapered corner portion 7 may have a rounded shape with a radius of 0.1 mm or less.

Next, as illustrated in FIG. 3C, in an unvulcanized rubber placing step, unvulcanized rubber 10' is placed on an upper surface of the head portion 8 of the metal fitting 2. The unvulcanized rubber 10' is in a block shape having a slightly larger volume than a necessary amount.

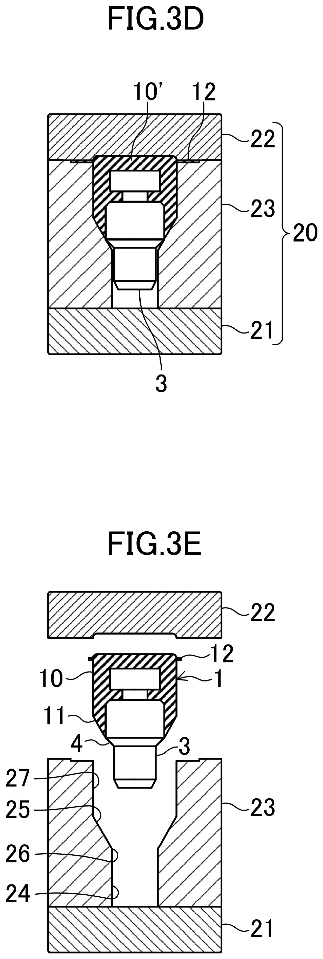

Then, as illustrated in FIG. 3D, in a press-vulcanization step, the metal mold 20 is clamped together with the upper mold 22 before the unvulcanized rubber 10' is sufficiently vulcanized to fill a cavity formed between an inner surface 22a of the upper mold 22, the metal mold tapered surface 25, and the large diameter hole portion 27 and the outer peripheral surface of the metal fitting 2 with the unvulcanized rubber 10'. Thereafter, the metal mold 20 in the above-described clamped state is maintained for a predetermined time to vulcanize the unvulcanized rubber 10' in the cavity.

Subsequently, as illustrated in FIG. 3E, in a mold release step, the metal fitting 2 is released from the metal mold 20 after a predetermined time has elapsed since vulcanization started and a burr 12 remaining at an upper portion of the rubber 10 is removed. The burr 12 is a burr formed on the outer periphery of the rubber 10 and can be removed relatively in a simple manner, for example, with a hand.

In this embodiment, since the metal fitting tapered angular portion 6 formed between the metal fitting tapered portion 4 and the metal fitting large diameter portion 5 is in linear contact with the metal mold tapered surface 25, a surface pressure tends to be high and leakage of the rubber 10 during molding can be prevented even with a small fitting force. Therefore, the metal mold tapered surface 25 and the shaft portion 3 of the metal fitting 2 can be prevented from being damaged and also generation of a burr can be suppressed. Moreover, because the fitting force is small, the metal fitting 2 can be easily released from the inner mold 23 during mold release.

Therefore, according to the composite product 1 of the metal fitting 2 and the rubber 10 according to this embodiment, in molding the composite product 1 of the metal fitting 2 and the rubber 10, generation of a burr can be prevented at a boundary between the metal fitting 2 and the rubber 10 with a simple configuration.

### - First Comparative Example -

For comparison, a method for manufacturing a composite product 101 of a metal fitting 102 and rubber 110 according to a first comparative example will be described.

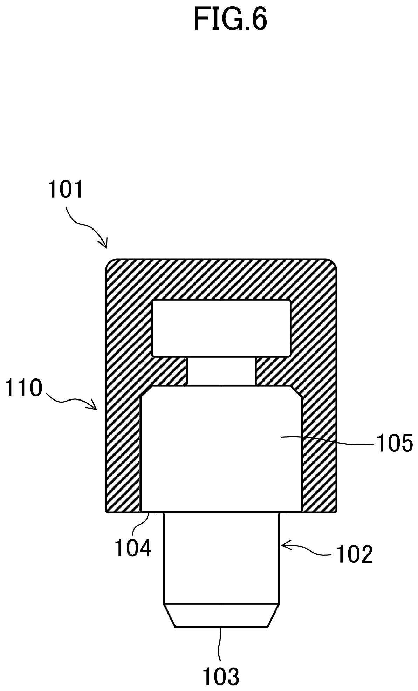

As illustrated in FIG. 6, a shape of the composite product 101 according to the first comparative example is different from the shape of the composite product 1 of the embodiment described above, no metal tapered portion is between a shaft portion 103 and a metal fitting large diameter portion 105 in the metal fitting 102, and a step portion 104 with an angle of 90 degrees is provided therebetween.

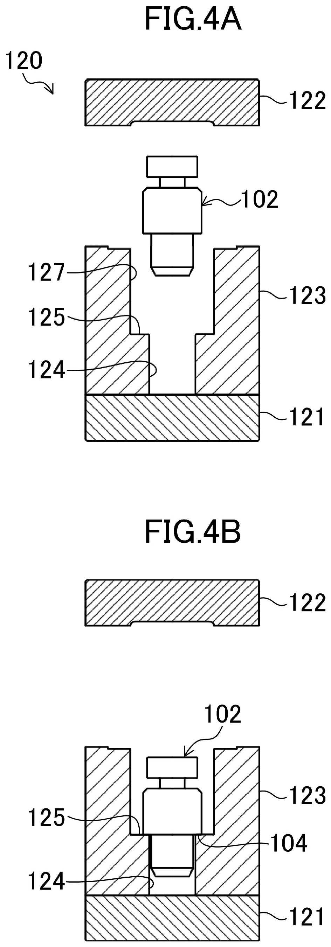

In the first comparative example, first, as illustrated in FIG. 4A, in a preparation step, a metal mold 120 of the first comparative example is prepared. The metal mold 120 includes a lower mold 121, an upper mold 122, and an inner mold 123 provided between the lower mold 121 and the upper mold 122 and including an inner surface that covers outer peripheral surfaces of at least the shaft portion 103 and the rubber 110.

Subsequently, as illustrated in FIG. 4B, in a metal fitting insertion step, the metal fitting 102 is inserted in the inner mold 123. Specifically, the shaft portion 103 is inserted in a small diameter hole portion 124 of the inner mold 123.

When the metal fitting 102 is inserted, the metal fitting step portion 104 of the metal fitting 102 is in surface contact with a metal mold step portion 125 between the small diameter hole portion 124 and a large diameter hole portion 127 of the inner mold 123 in an annular surface. In the first comparative example, increase in a degree of fitting by a wedge effect cannot be expected because of pressing of the metal fitting 102.

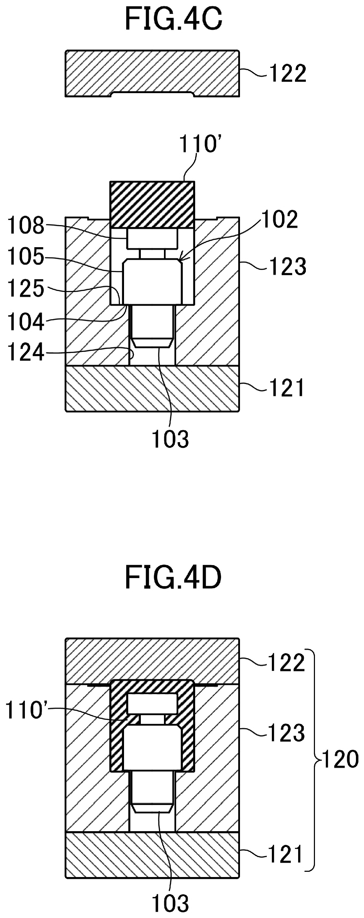

Next, as illustrated in FIG. 4C, in an unvulcanized rubber placing step, unvulcanized rubber 110' is placed on an upper surface of the head portion 108 of the metal fitting 102.

Then, as illustrated in FIG. 4D, in a press vulcanization step, the metal mold 120 is clamped together with the upper mold 122 before the unvulcanized rubber 110' is sufficiently vulcanized to fill a cavity formed between an inner surface of a metal mold and an outer peripheral surface of a metal fitting with the unvulcanized rubber 110'. Thereafter, a clamped body with the unvulcanized rubber 110' filled in the cavity is maintained for a predetermined time to vulcanize the unvulcanized rubber 110'.

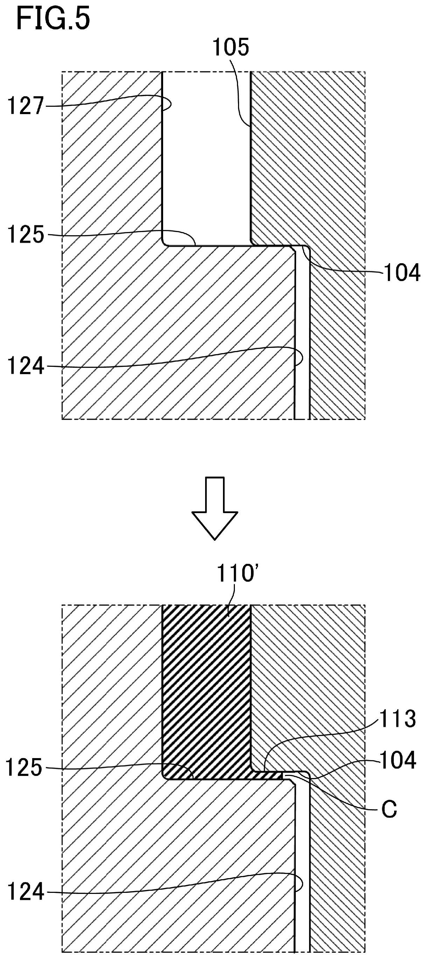

At this time, since the wedge effect cannot be expected in the first comparative example, it is likely that a gap C is generated between the metal mold step portion 125 and the metal fitting step portion 104 and the unvulcanized rubber 110' flows in the gap C to form a thin burr 113, as illustrated in FIG. 5, unless a clamping force by the upper mold 122 is increased or the degree of fitting between the shaft portion 103 and the small diameter hole portion 124 is increased.

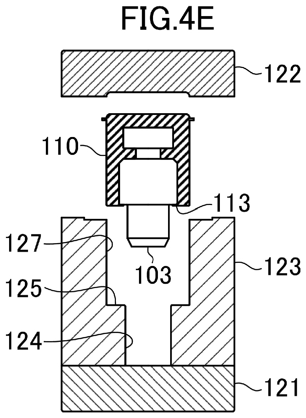

Subsequently, as illustrated in FIG. 4E, the metal fitting 102 is released from the metal mold 120 after a predetermined time has elapsed since vulcanization started. At this time, since a fitting strength of the metal fitting 102 and the inner mold 123 has been increased, a scratch is readily generated at the shaft portion 103 by the inner mold 123 formed of a high hardness steel material NAK. The thin burr 113 is likely to be a cause for generation of a foreign substance since the thin burr 113 easily peels off when being used, and therefore, the thin burr 113 needs to be removed. In a position where the thin burr 113 has been formed, removal work of the thin burr 113 is difficult to perform, resulting in an increased labor.

However, in the method for manufacturing the composite product 1 according to this embodiment, the thin burr 113 described above is not generated and there is no need to tightly clamp the metal mold 20 more than necessary, so that the shaft portion 3 is less likely to be damaged. Accordingly, due partly to easiness of a finishing work of the composite product 1, work steps can be reduced as compared to the first comparative example.

### - Second Comparative Example -

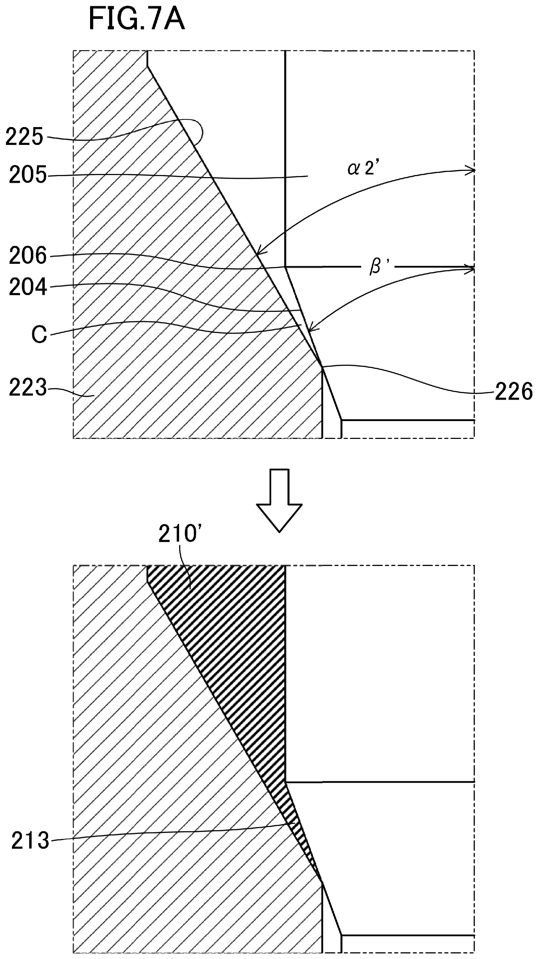

In a second comparative example illustrated in FIG. 7A, a metal fitting angle β' of a metal fitting 202 is smaller than a metal mold angle α2' (β' < α2').

In the second comparative example, a metal fitting tapered angular portion 206 does not contact a metal mold tapered surface 225 but a metal fitting tapered portion 204 contacts a metal mold tapered angular portion 226.

Thus, the metal fitting tapered portion 204 is easily damaged by the metal mold tapered angular portion 226 of an inner mold 223 formed of a high hardness steel material, and moreover, unvulcanized rubber 210' flows in a gap C between the metal fitting tapered portion 204 and the metal mold tapered surface 225 to form a thin burr 213.

In the second comparative example, the thin burr 213 cannot be left and thus needs to be removed, but a removal work thereof cannot be performed simply by tearing off the thin burr 213 with a hand, requiring a very troublesome work.

### - Third Comparative Example -

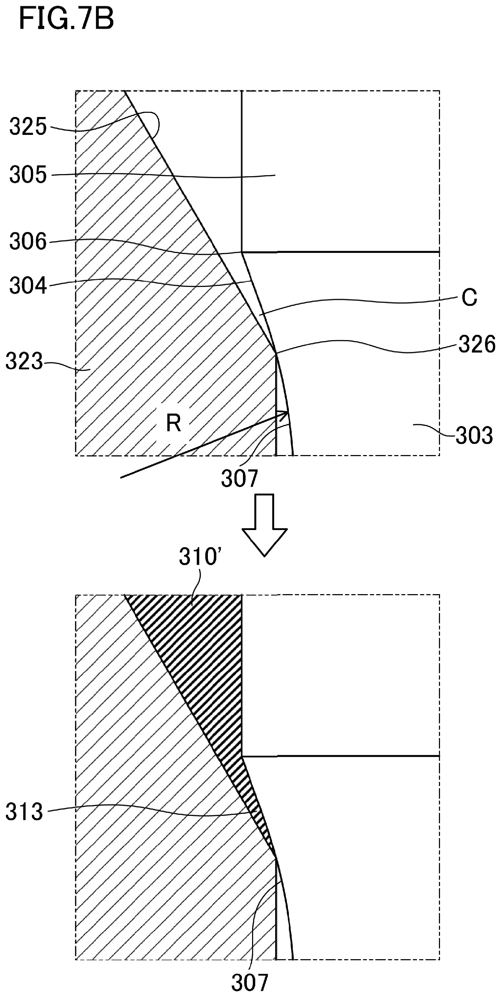

In a third comparative example illustrated in FIG. 7B, similar to the composite product 1 illustrated in FIG. 1, a metal fitting angle β' of a metal fitting 302 is larger than a metal mold angle α2' (1 degree ≤ β' - α2' ≤ 5 degrees), but a boundary cross section between a metal fitting tapered portion 304 and a shaft portion 303 is rounded to be in a circular arc shape.

In the third comparative example, a metal fitting tapered angular portion 306 does not contact a metal mold tapered surface 325 but the metal fitting tapered portion 304 contacts a metal mold tapered angular portion 326. In this case, a size of a metal mold tapered corner portion 307 of the metal fitting tapered portion 304 is larger than a radius of 0.1 mm. When the size of the metal mod tapered corner portion 307 is larger than a radius of 0.1 mm, the metal tapered corner portion 306 is more likely not to contact the metal mold tapered surface 325. Thus, unvulcanized rubber 310' flows in a gap C generated in a boundary cross section between the metal fitting tapered portion 304 and a metal mold tapered surface 325 to form a thin burr 313.

Also, in the third comparative example, the thin burr 313 cannot be left and thus needs to be removed, but a removal work thereof cannot be performed simply by tearing off the thin burr 313 with a hand, requiring a very troublesome work.

### - Other Embodiments -

The present disclosure may have configurations as follows for the embodiments described above.

That is, in the embodiment described above, the upper mold 22 is movable, but the inner mold 23 and the lower mold 21 may be movable.

In the embodiment described above, the inner mold 23 and the lower mold 21 are separate molds, but may be substantially integrated as a single mold.

Note that the above-described embodiments are merely preferable examples by nature and are not intended to be particularly limiting the present disclosure, application of the present disclosure, and the scope of use.

### DESCRIPTION OF REFERENCE CHARACTERS

- 1: Composite product
- 2: Metal fitting
- 3: Shaft portion
- 4: Metal fitting tapered portion
- 5: Metal fitting large diameter portion
- 6: Metal fitting tapered angular portion
- 7: Metal fitting tapered corner portion
- 8: Head portion
- 9: Neck portion
- 10: Rubber
- 10': Unvulcanized rubber
- 11: Rubber tapered surface
- 20: Metal mold
- 21: Lower mold
- 22: Upper mold
- 23: Inner mold
- 25: Metal mold tapered surface

## Claims

1. A composite product (1) of a metal fitting (2) and rubber, the composite product comprising:
a cylindrical shaft portion (3) extending in an axial direction;
a metal fitting large diameter portion (5) an outer diameter of which is larger than an outer diameter of the shaft portion (3) at least at a lower end; and
a metal fitting (2) that is continuous with the lower end of the metal fitting large diameter portion (5) and an upper end of the shaft portion (3) and includes a metal fitting tapered portion (4) gradually decreasing in an outer diameter downward,
wherein
at least an outer periphery of the metal fitting large diameter portion (5) is covered with rubber,
the metal fitting tapered portion (4) and the shaft portion (3) are exposed without being covered with the rubber,
a rubber tapered surface (11) is formed at an outer peripheral surface of the rubber continuous with the metal fitting tapered portion (4), and
a rubber angle (α1) of the rubber tapered surface (11) to a shaft center of the shaft portion (3) is smaller than a metal fitting angle (β) of the metal fitting tapered portion (4) to the shaft center of the shaft portion (3).

2. The composite product (1) of a metal fitting (2) and rubber according to claim 1, wherein
the rubber angle (α1) is smaller than the metal fitting angle (β) by 1 degree or more to 5 degrees or less.

3. The composite product (1) of a metal fitting (2) and rubber according to claim 1 or 2, wherein
a metal fitting tapered angular portion (6) that is formed between the metal fitting tapered portion (4) and the metal fitting large diameter portion (5) has an angular shape with no rounded edge.

4. The composite product (1) of a metal fitting (2) and rubber according to claim 1 or 2, wherein
a metal fitting tapered corner portion (7) that is formed between the metal fitting tapered portion (4) and the shaft portion (3) of the metal fitting (2) has a shape with no rounded edge or a rounded shape with a radius of 0.1 mm or less.

5. A method for manufacturing a composite product (1) of a metal fitting (2) and rubber,
the composite product (1) including
a cylindrical shaft portion (3) extending in an axial direction,
a metal fitting large diameter portion (5) an outer diameter of which is larger than an outer diameter of the shaft portion (3) at least at a lower end, and
a metal fitting (2) that is continuous with the lower end of the metal fitting large diameter portion (5) and an upper end of the shaft portion (3) and includes a metal fitting tapered portion (4) gradually decreasing in an outer diameter downward, and
the composite product (1) having a configuration in which
at least an outer periphery of the metal fitting large diameter portion (5) is covered with rubber, and
the metal fitting tapered portion (4) and the shaft portion (3) are exposed without being covered with the rubber,
the method comprising:
preparing a metal mold
that includes
a lower mold (21),
an upper mold (22), and
an inner mold (23) provided between the lower mold (21) and the upper mold (22) and having an inner surface that covers outer peripheral surfaces of at least the shaft portion (3), the metal fitting tapered portion (4), and the rubber, and
in which a metal mold angle (α2) of a metal mold tapered surface (25) of the inner mold that the metal fitting tapered portion (4) contacts to a shaft center of the shaft portion (3) is smaller than a metal fitting angle (β) of the metal fitting tapered portion (4) to the shaft center of the shaft portion (3) when the metal fitting (2) is inserted therein;
placing unvulcanized rubber on an upper side of the metal fitting (2) in a state where the metal fitting (2) is inserted in the inner mold (23) and a metal fitting tapered angular portion (6) that is formed between the metal fitting tapered portion (4) and the metal fitting large diameter portion (5) is in linear contact with the metal mold tapered surface (25) over an entire periphery;
clamping the metal mold, heating the metal mold, and then, maintaining the metal mold for a predetermined time; and
releasing the metal fitting (2) from the metal mold after vulcanizing the unvulcanized
rubber.

6. The method for manufacturing a composite product (1) of a metal fitting (2) and rubber according to claim 5, wherein
the metal mold angle (α2) is smaller than the metal fitting angle (β) by 1 degree or more and 5 degrees or less.

7. The method for manufacturing a composite product (1) of a metal fitting (2) and rubber according to claim 5 or 6, wherein
the metal fitting tapered angular portion (6) has an angular shape with no rounded edge.

8. The method for manufacturing a composite product (1) of a metal fitting (2) and rubber according to claim 5 or 6, wherein
a metal fitting tapered corner portion (7) that is formed between the metal fitting tapered portion (4) and the shaft portion (3) of the metal fitting (2) has a shape with no rounded edge or a rounded shape with a radius of 0.1 mm or less.
